# EUROPEAN PATENT APPLICATION

(11) **EP 2 178 054 A1**
(43) Date of publication of application: **21.04.2010**
(21) Application number: 08464016.8
(22) Date of filing: 14.10.2008
(51) Int. Cl.: G07C 9/00, B60R 25/00

(54) **Identification device and method for supplying an identification device**

(71) Applicant: Continental Automotive GmbH, 30165 Hannover (DE)
(72) Inventor: Balabas, Cristian, 300269 Timisoara (RO)

(57) **Abstract**

It is provided an identification device for remote keyless entry of a vehicle with a battery, an antenna and an antenna driving stage, the antenna and the antenna driving stage for sending a wireless authentication signal to the vehicle. A control circuit is provided for controlling the antenna driving stage (22). A voltage regulator (24) provides a stable voltage for the control circuit (21) the voltage regulator (24) being supplied by the battery (10).

## Description

The invention relates to an identification device and a method for supplying of an identification device. Identification devices are used for remote keyless entry of vehicles. A user of the vehicle carries an identification device to lock and unlock the doors of the vehicle in a distance of several meters from the user to the vehicle. The distance depends on the radio frequency (RF) power transmitted by the identification device and on the sensitivity of the receiver. A typical value is 25 m. The identification device may share its housing with a key of the vehicle and may comprise buttons. By pressing one of these buttons, an authentication signal is sent wirelessly from the identification device to a receiver of the vehicle. The received signal is decoded and it is verified if the signal was sent from the identification device being unique for this vehicle. If this check is positive, the vehicle automatically locks or unlocks its doors.

The WO 94/14639 shows a key with an identification device having a battery, an electronic circuit and an antenna being driven by the electronic circuit.

It is desired to increase the distance between the identification device and the vehicle, preferable up to 500 meters. The distance was up to now limited by constraints for the power consumption, as the battery should work for seven years without the need of changing the batteries.

Accordingly, it is object of the invention to provide an identification device providing signals having a high power without reducing the lifetime of the batteries.

It is further object of the invention to provide a method for providing power supply for such identification device.

These objects are solved by the subject matter of the independent claims. Further embodiments are subject of the independent claims.

It is provided an identification device for remote keyless entry of a vehicle. The identification device comprises a battery, an antenna and an antenna driving stage for sending a wireless authentication signal to the vehicle. The identification device further comprises a control circuit for controlling the antenna driving stage and a voltage regulator for providing a stable voltage for the control circuit, the voltage regulator being supplied by the battery.

The voltage needed to drive the antenna driving stage and the antenna has usually a lower limit to ensure that the wireless signal that has enough power to bridge over a given distance. With a non-regulated voltage of the micro-controller, the function of the microcontroller has to be guaranteed even when the voltage supply changes due to transients or when the battery is only partly charged.

Additionally, the microcontroller must stand the high battery voltage. Such microcontrollers require a high technical effort and are expensive. With the help of the regulated supply a standard microcontroller may be used.
Further, the high supply voltage of the control circuit also means a high power consumption of the control circuit, both in stand-by and in active mode of the control circuit. The stand-by power consumption has a high influence on the lifetime of the battery. The lifetime will increase with the provision of the voltage regulator.

In a preferred embodiment, a first switch is provided for initiating the sending of the wireless authentication signal when the first switch is pressed. The first switch is also arranged to switch the voltage regulator on. This makes it possible to provide the voltage for the control circuit only in the case when the control circuit is needed for sending the authentication signal. This additionally reduces the power consumption.

To obtain a high RF power to bridge over 500 m, the key must be supplied by a voltage that is higher than the normal supply voltage of normally 3.6V. A standard voltage regulator has a leakage current of 15-20 µA. However, the leakage of the complete identification device should not increase 1.5 µA to guarantee the lifetime of the battery. This embodiment makes it possible to use a cheap voltage regulator and together with the switching off the voltage regulator makes it possible to obtain very low leakage currents.

If the control circuit comprises an output to switch the voltage regulator on, the length of the phases in which of the voltage regulator is on may be controlled independently from the first switch.

In an embodiment, a delay circuit is provided for switching off the voltage regulator at a predetermined time after sending the wireless authentication signal. The delay circuit makes sure that the identification device goes into a power-saving mode after sending the authentication signal. This reduces the power consumption in stand-by mode, when no signal is broadcast from the identification device to the vehicle.

If the antenna driving stage is supplied by the battery, the signal being sent out by the identification device may have a higher power to send the signal over a long distance up to 500 meters or more.

With a given power limitation and given battery voltages, it was only possible to achieve such signal power with the help of large and expensive antenna driving circuits.

Supplying the antenna driving stage by the battery and the voltage regulator by the voltage regulator has also advantages over solutions according to which the antenna driving stage and the controller are supplied by different batteries. Such a solution is expensive since the mechanical part of the key is much more difficult to build and to replace the batteries becomes difficult for the user.

In an embodiment, a second switch is provided for sending a second wireless authentication signal. The second switch is also arranged to switch the voltage regulator on. The second switch may provide a second signal, for example to unlock the doors, whereas the first switch initiates the locking of the doors. Switching on the voltage regulator makes sure that the control circuit is activated to initiate the sending of the authentication signal.

If a diode is coupled between a terminal of the first switch and an inhibit input of the voltage regulator, the first switch may directly switch the voltage regulator. The voltage regulator goes off again after the complete telegram was sent.

A stand-by mode is provided in which the voltage regulator is switched off to prevent standby-current of the control circuit during the time when the identification device is not active.

Preferably, the control circuit is implemented in an integrated circuit to keep the size of the identification device small.

The invention also provides a method to provide a power supply for an inventive identification device. The method comprises a step of switching the voltage regulator on when the sending of the authentication signal is initiated. In a further step, the voltage regulator is switched off at a predetermined time after the authentication signal has been sent. This method allows decreasing the stand-by consumption of the identification device. Thus, the battery lifetime is increased.

The identification device allows supplying the micro-controller with a standard voltage. There is no need to use specific expensive micro-controllers that stand high battery voltages. A small and cheap regulator can be used to supply the control circuit. The voltage regulator is waken up by the buttons of the identification device. The buttons do not wake up the micro-controller directly, but it wakes up the power supply. This may be done with a very low cost design.

In an embodiment of the method, a step of outputting a signal by the control circuit is provided to keep the voltage regulator on. This ensures that the time for sending out the authentication signal is long enough without requiring the user to press the button of the identification device too long.

In a preferred embodiment, the voltage regulator provides a voltage of 0 V at its output if the voltage regulator is switched off. This ensures that there is no stand-by current consumed by the control circuit. In other words, the stand-by current is zero.

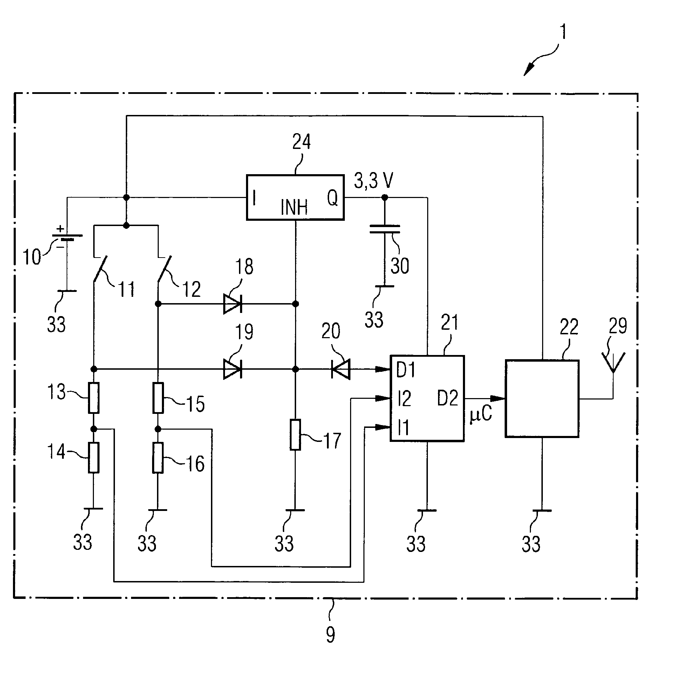

The invention is further demonstrated with help an exemplary embodiment shown in Figure 1.

Figure 1 shows an embodiment of an identification device according to the invention. The identification device 1 comprises the housing 9 in which a battery 10, a voltage regulator 24, a capacitor 30, a control circuit 21, an antenna driving stage 22, an antenna 29, a first switch 11, a second switch 12, a first diode 18, a second diode 19, a third diode 20, a first resistor 13, a second resistor 14, a third resistor 15, a fourth resistor 16 and a fifth resistor 17 are located.

The battery 10 provides a voltage of 6 V between its positive pole and its negative pole. The negative pole is connected to the internal ground 33. The positive pole of the battery 10 is connected to the input I of the voltage regulator 24 and to the first terminals of the switches 11 and 12. The antenna driving stage 22, which drives the antenna 29, is directly supplied by the battery 10.

The control circuit 21, which is implemented as an integrated microcontroller, is supplied by the output Q of the voltage regulator 24 and ground 33. The microcontroller is a standard microcontroller being specified for supply voltage up to 4 V.

The voltage regulator 24 is switched on and off depending on the input voltage at the input INH. If the voltage regulator 24 is switched on, it provides a stable voltage of 3.3 V at its output Q. All voltages are referenced to the potential of ground 33.

If the voltage at this input INH is lower than 0.5 V the voltage regulator 24 is turned off such that a voltage around 0 V is established at the output Q of the voltage regulator 24. In contrast, if the voltage at the input INH is higher than 2 V, the voltage regulator 24 is turned on. If the voltage regulator 24 is on, it compares the voltage at the output Q with a reference voltage, e.g. provided by a band-gap reference. The voltage regulator provides more or less current to its output Q if the voltage Q differs from a desired voltage. One example for a voltage regulator 24 that may be used is the TLE 4296 of Infineon Technologies AG.

The capacitor 30 is provided between the output Q and ground 33 to keep the voltage as stable as possible, especially when the current drawn by the load differs. If the voltage regulator 24 is switched off, the output Q is for example clamped to ground 33.

How the voltage regulator 24 is switched on and off will be explained by the following. The second terminal of the first switch 11 is connected to a series connection of the resistors 13 and 14, whereby the other end of the series connection of resistors 13 and 14 is connected to ground 33.

A series connection of the resistors 15 and 16 is connected between the second terminal of the second switch 12 and ground 33. The connection point between the first resistor 13 and the second resistor 14 is connected to a first input I1 of the control circuit 21. The connection point between the third resistor 15 and the fourth resistor 16 is connected to a second input I2 of the control circuit 21.

The second terminal of the first switch 11 is connected to the anode of the second diode 19, the second terminal of the second switch 12 is connected to the anode of the first diode 18 and the anode 20 is connected to a first output of the control circuit 21. The fifth resistor 17 is connected between ground 33 and the input INH of the voltage regulator 24. The cathodes of the diodes 18, 19 and 20 are also connected to the input of the voltage regulator 24.

In stand-by mode of the identification device, no signal is sent via the antenna 29. In this mode, the first switch 11 and the second switch 12 are open. The voltage at the anodes of the diodes 18 and 19 are zero as well as voltages at the first and second inputs of the control circuit 21 and at the first output O1 of the control circuit 21.

Accordingly, the voltage at the input INH of the voltage regulator 24 is 0 V due to the current path from the input INH through the fifth resistor 17 to ground 33. The voltage regulator 24 switches off and provides a voltage of 0 V at its output Q. Thus, the control circuit 21 is not supplied such that the leakage of the control circuit 21 becomes zero. It has to be considered, that in most of its lifetime, probably more than 99%, the identification device 1 is in stand-by mode. Thus, saving power in stand-by has a much higher effect on the total power consumption as savings during the active modes when signals are sent to the vehicle.

If a user wishes to unlock the door of the vehicle, he presses a first button of the identification device. The first button closes the first switch 11. The voltage at the second terminal of the first switch 11 increases to 6 V, such that the voltage at the input INH is at almost 6 V. The voltage regulator 24 switches on and provides a voltage of 3.3 V at its output Q.

For the given embodiment, it is estimated that it will take about 5 µs to establish a stable voltage of 3.3 V at the output Q. The control circuit 21 is switched on, wakes up and then starts to output commands at its second output 02 to let the antenna driving stage drive the antenna 29. The control circuit 21 modulates a code on the signal being sent out by the antenna which is unique for the vehicle and for unlocking the door. This code ensures that the vehicle only unlocks in response to the identification device that was specially programmed for this car.

When the control circuit 21 has waken up, it drives a high voltage of 3.3 V at its first output O1. This ensures that the third diode 21 provides a voltage higher than 3 V at the input INH of the voltage regulator 24.

For the given embodiment, it takes about 5 ms to wake up the control circuit 21. It is specified, that the user must press the button for at least 10 to 20 ms to drive an authentication signal. This is to make sure that the user does not open the car by accident or accidentally if the button contacts are dirty or damaged. These 10 to 20 ms are sufficient to start the voltage regulator 24 and to wake up the control circuit 21.

After the user has released the first switch 11, the control circuit 21 and the antenna driving stage 22 continue to send the wireless authentication signal 29 to the vehicle. During this time, the voltage at the output 02 is high keeping the voltage regulator 24 on. After the signal has been sent, the control circuit 21 starts a timer, which runs a predetermined time. After this predetermined time, e.g. 1 ms, the control circuit 21 outputs a voltage of 0 V at its first output. Accordingly, the voltage at the input INH goes to 0 V again, switching the voltage regulator 24 off.

The identification device 1 also comprises a second button, which closes the second switch 12 to initiate the closing the vehicle's doors. The circuitry for the second switch 12 is analogous to the circuitry for the first switch 11. The second switch 12 initiates a different authentication signal being wirelessly sent to the vehicle such that the vehicle can distinguish if the first or the second button was pressed. Pressing the second button also switches the voltage regulator 24 on to wake up the microcontroller. The leakage current obtained by the circuitry of Figure 1 was lower than 1 µA in worst case and typically lower than 50 nA.

### Reference Number List

- 1: Identification Device
- 9: Housing
- 10: Battery
- 11: First Switch
- 12: Second Switch
- 13: First Resistor
- 14: Second Resistor
- 15: Third Resistor
- 16: Fourth Resistor
- 17: Fifth Resistor
- 18: First Diode
- 19: Second Diode
- 20: Third Diode
- 21: Control Circuit
- 22: Antenna Driving Stage
- 24: Voltage Regulator
- 29: Antenna
- 33: Ground

## Claims

1. Identification device (1) for remote keyless entry of a vehicle comprising:
- a battery (10),
- an antenna (29) and an antenna driving stage (22) for sending a wireless authentication signal to the vehicle,
- a control circuit (21) for controlling the antenna driving stage (22), **characterized by**
a voltage regulator (24) for providing stable voltage for the control circuit (21), the voltage regulator (24) being supplied by the battery (10).

2. Identification device according to claim 1, **characterized in that** a first switch (11) is provided for initiating the sending of the wireless authentication signal when the first switch (1) is pressed, whereby the first switch (11) is arranged to switch the voltage regulator (24) on.

3. Identification device according to claim 1, **characterized in that** the control circuit (21) comprises an output to keep the voltage regulator (24) on.

4. Identification device according to one of the claims 1 to 3, **characterized in that** a delay circuit is provided for switching off the voltage regulator (24) at a predetermined time after sending the wireless authentication signal.

5. Identification device according to one of the claims 1 to 4, **characterized in that** the antenna driving stage (22) is supplied by the battery (10).

6. Identification device according to one of the claims 1 to 5, **characterized in that** a second switch (12) is provided for sending a second wireless authentication signal when the second switch (12) is pressed,
whereby the second switch (12) is arranged to switch the voltage regulator (24) on.

7. Identification device according to one of the claims 1 to 5, **characterized by** a diode being coupled between a terminal of the first switch and an inhibit input of the voltage regulator (24).

8. Identification device according to one of the preceding claims, **characterized in that** a stand-by mode is provided in which the voltage regulator (24) is switched off.

9. Identification device according to one of the preceding claims, **characterized in that** the control circuit (21) is implemented in an integrated circuit.

10. Method for providing a power supply for an identification device according to one of the claims 2 to 9, the method comprising the steps:
- switching the voltage regulator (24) on when the first switch (11) is switched for sending the authentication signal to the vehicle
- switching the voltage regulator (24) off after the authentication signal has been sent.

11. Method according to claim 10, comprising a further step before switching the voltage regulator (24) on, the further step comprising:
- outputting a signal by the control circuit (21) to keep the voltage regulator (24) being switched on when the authentication signal is being sent.

12. Method according to claim 11, **characterized in that** the voltage regulator (24) provides a voltage of 0 V at its output if it is switched off.
